# DEMANDE DE BREVET EUROPEEN

(11) **EP 2 141 401 A1**
(43) Date de publication de la demande: **06.01.2010**
(21) Numéro de dépôt: 09162769.5
(22) Date de dépôt: 16.06.2009
(51) Int. Cl.: F16L 29/00, F16L 47/32

(54) **Raccord pour le branchement de tuyaux notamment d'un circuit de depression du moteur d'un véhicule automobile**

(30) Priorité: 30.06.2008 FR 0854422
(71) Demandeur: Peugeot Citroën Automobiles SA, 78140 Vélizy-Villacoublay (FR)
(72) Inventeur: Amado, Toni, 94130 Nogent sur Marne (FR); Coste, Laurent, 95120 Ermont (FR)
(74) Mandataire: Ménès, Catherine

(57) **Abrégé**

L'invention concerne un raccord pour le branchement de tuyaux notamment d'un circuit de dépression du moteur d'un véhicule automobile.

Selon l'invention, la branche tubulaire (5) du raccord (1) comprend à son extrémité une partie sécable (7) obturant de façon étanche la branche (5) et pouvant être séparée de cette dernière pour raccorder un tuyau à la branche tubulaire (5).

L'invention trouve application dans le domaine de l'automobile.

## Description

La présente invention concerne un raccord pour le branchement de tuyaux notamment d'un circuit de dépression du moteur d'un véhicule automobile.

De tels raccords sont largement utilisés pour relier des tuyaux et des éléments fonctionnels d'un véhicule automobile, notamment ceux reliés à un circuit de dépression monté en usine du moteur du véhicule.

Chaque raccord a l'une de ses branches tubulaires raccordée à une tubulure d'un élément produisant une dépression, tel qu'une pompe à vide, et une autre branche tubulaire raccordée à un tuyau souple qui est raccordé à son extrémité opposée à un équipement fonctionnel du véhicule, tel que par exemple les servos-freins de celui-ci.

Ce raccord peut comporter également une troisième branche tubulaire normalement obturée hermétiquement par un bouchon amovible en une matière plastique ou caoutchouteuse pouvant être fixé à l'extrémité correspondante de la troisième branche tubulaire par des moyens d'encliquetage.

La troisième branche tubulaire du raccord est disponible de façon à permettre si nécessaire le branchement en usine d'un autre élément fonctionnel du véhicule par l'intermédiaire d'un tuyau souple. Un tel élément fonctionnel destiné à être monté en option sur le véhicule peut être constitué par un réchauffeur thermique utilisant la chaleur des gaz d'échappement du véhicule et devant être branché sur le circuit de dépression appartenant au moteur de ce véhicule.

Ce raccord connu a pour inconvénient de nécessiter l'ajout d'un bouchon d'obturation de la branche tubulaire correspondante du raccord et devant être désolidarisé de la branche pour la brancher à un élément fonctionnel du véhicule. Un tel bouchon constitue un élément supplémentaire peu économique et devant être placé par un opérateur en usine sur l'extrémité de la branche correspondante du raccord.

La présente invention a pour but de palier l'inconvénient ci-dessus des raccords connus.

A cet effet, l'invention propose un raccord pour le branchement de tuyaux notamment d'un circuit de dépression du moteur d'un véhicule, comprenant au moins une branche tubulaire à laquelle peut être raccordé un tuyau, et qui est **caractérisé en ce que** la branche tubulaire comprend à son extrémité une partie sécable obturant de façon étanche la branche tubulaire et pouvant être séparée de la branche tubulaire pour raccorder un tuyau à cette dernière.

De préférence, la partie sécable est reliée à l'extrémité de la branche tubulaire par l'intermédiaire d'une gorge frangible.

Avantageusement, la partie sécable est conformée pour empêcher le raccordement d'un tuyau à la branche tubulaire tant que cette partie reste solidaire de la branche tubulaire.

La partie sécable est conformée en ailes de papillon.

De préférence, la partie sécable peut être rompue à l'aide d'un outil, tel qu'une pince coupante.

Avantageusement, un insert cylindrique rigide percé axialement est logé coaxialement dans la branche tubulaire pour rigidifier cette dernière.

Dans une première variante de réalisation, la branche tubulaire comprend des stries annulaires externes permettant la fixation d'un tuyau souple emmanché sur la branche tubulaire.

Selon une autre variante de réalisation, la branche tubulaire est adaptée pour être raccordée à un tuyau par l'intermédiaire d'une liaison encliquetable.

Le raccord comprend une deuxième branche tubulaire en communication de fluide avec la branche tubulaire à partie sécable et à laquelle peut être raccordé un autre tuyau.

Les deux branches tubulaires sont reliées l'une à l'autre suivant une configuration en T du raccord.

De préférence, le raccord est réalisé en une seule pièce en une matière thermoplastique.

L'invention vise également un moteur à combustion interne d'un véhicule automobile et qui est **caractérisé en ce qu**'il est équipé d'au moins un raccord tel que défini précédemment, la partie sécable de la branche tubulaire de ce raccord pouvant être rompue pour raccorder à cette branche un tuyau faisant partie d'un circuit de dépression du moteur du véhicule.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant deux modes de réalisation de l'invention et dans lesquels :
- la figure 1 est une vue en perspective en coupe dans un plan médian longitudinal du raccord conforme à l'invention ;
- la figure 2 est une vue en coupe suivant la ligne II-II de la figure 1 ; et
- la figure 3 est une vue en perspective semblable à celle de la figure 1 et représentant une variante de réalisation de l'invention.

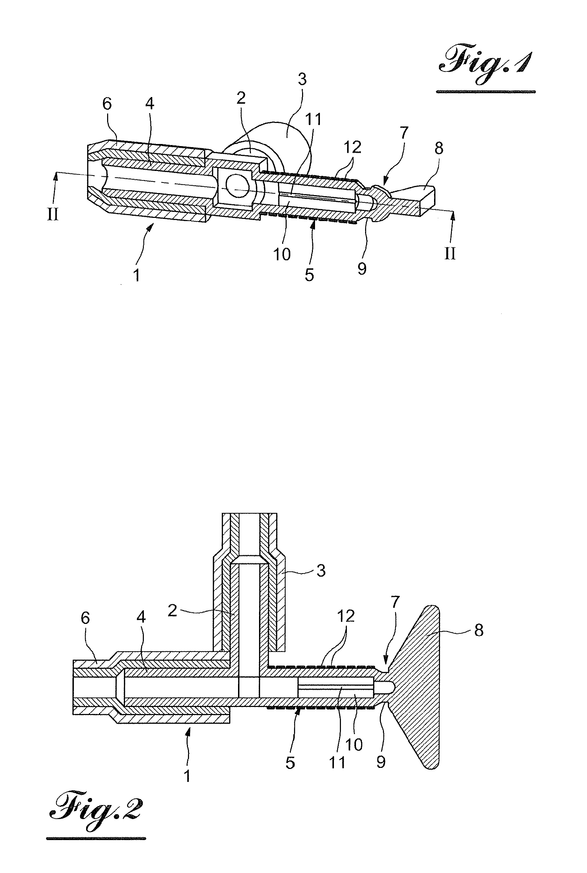

En se reportant aux figures 1 et 2, la référence 1 désigne un raccord pour le branchement de tuyaux permettant de mettre en communication de fluide des équipements ou éléments d'un véhicule automobile.

Le raccord 1 va être décrit comme faisant partie d'un circuit de dépression du moteur du véhicule monté en usine et permettant de relier une source de dépression à des éléments du véhicule, tels que par exemple des servos-freins de celui-ci.

Cependant, le raccord 1 peut être utilisé dans d'autres applications permettant de mettre en communication de fluide divers éléments ou équipements fonctionnels dans un domaine autre que celui des véhicules automobiles.

Le raccord 1 présente une configuration générale en T dont la branche tubulaire longitudinale 2 est raccordée à une tubulure 3 qui est raccordée à son extrémité opposée à une source de dépression, telle qu'une pompe à vide, non représentée. Comme représentée, la branche tubulaire longitudinale 2 du raccord 1 est emmanchée à force dans la tubulure 3 réalisée en une matière plastique souple ou caoutchouteuse.

La partie transversale du raccord 1 est constituée de deux branches tubulaires 4, 5 en communication de fluide l'une avec l'autre et avec la branche tubulaire 2.

La branche tubulaire 4 du raccord 1 est branchée en usine à un tuyau souple 6 par exemple emmanché à force sur la branche tubulaire 4 et dont l'extrémité opposée est branchée à des éléments du véhicule, tels que les servos-freins de celui-ci, de façon qu'ils soient reliés fonctionnellement à la pompe à vide.

L'autre branche tubulaire transversale 5 du raccord 1 a son extrémité opposée à la branche longitudinale 2 obturée de façon étanche par une partie 7.

Conformément à l'invention, la partie 7 d'obturation hermétique de l'extrémité de la branche tubulaire 5 est sécable et peut ainsi être séparée de l'extrémité de la branche 5 pour assurer le branchement du raccord 1 à un autre équipement ou élément fonctionnel du véhicule par l'intermédiaire d'un tuyau souple, non représenté. Cet autre élément ou équipement fonctionnel peut être constitué par un réchauffeur thermique utilisant les gaz chauds d'échappement.

La partie sécable 7 comprend deux ailes coplanaires de papillon 8 disposées symétriquement à un plan médian longitudinal de la branche tubulaire 5 et qui sont raccordées à l'extrémité de la branche 5 par l'intermédiaire d'une gorge frangible 9 permettant la séparation de la partie 7 de l'extrémité de la branche tubulaire 5.

De préférence, la séparation de la partie sécable 7 de l'extrémité de la branche tubulaire 5 s'effectue à l'aide d'un outil, tel qu'une pince coupante.

De préférence, le raccord 1 avec sa partie sécable 7 est réalisé en une seule pièce par moulage d'une matière thermoplastique. Dans certains cas, la partie sécable 7 pourrait être séparée manuellement, c'est-à-dire sans outil, de l'extrémité de la branche tubulaire 5 du raccord 1 en rompant la gorge frangible 8. Avantageusement, un insert rigide cylindrique 10 peut être logé dans la branche tubulaire 5 sur une majeure partie de sa longueur dans le but de la rigidifier et d'éviter une rupture de la matière plastique constituant cette branche lors de l'opération de coupage de la partie sécable 7. L'insert 10 est logé concentriquement dans la branche tubulaire 5 sans pratiquement de jeu radial avec cette dernière et comporte un perçage axial 11 traversant l'insert pour constituer un ajustage généralement nécessaire dans l'application du raccord 1 au branchement d'équipements au circuit de dépression du moteur du véhicule.

Les ailes de papillon 8 de la partie sécable 7 sont conformées de manière à empêcher le branchement d'un tuyau souple à l'extrémité de la branche tubulaire 5 du raccord 1 tant que la partie 7 reste solidaire de cette branche. En outre, les ailes de papillon 8 permettent de saisir manuellement en toute facilité la partie sécable 7 lors de sa séparation de l'extrémité de la branche tubulaire 5. Bien entendu, les ailes de papillon 8 peuvent être remplacées par toute autre forme empêchant le branchement d'un tuyau à la branche 5 tant que la partie 7 est solidaire de cette branche.

En usine, le circuit de dépression présent sur le moteur du véhicule comporte le raccord 1 dont la branche tubulaire 4 permet de mettre en communication la pompe à vide avec les servos-freins du véhicule en tant qu'équipement fonctionnel. La présence de la branche tubulaire supplémentaire 5 permet, le cas échéant, d'y raccorder dans le circuit de dépression un autre équipement fonctionnel, tel que le réchauffeur thermique utilisant les gaz chaud d'échappement et nécessitant une dépression pour son fonctionnement. A cet effet, un opérateur utilise une pince coupante pour sectionner la partie sécable 7 au niveau de la gorge 9 et séparer la partie 7 de l'extrémité de la branche 5 sur laquelle peut alors être emmanché le tuyau souple correspondant. Pour tenir axialement le tuyau souple sur la branche 5, cette dernière peut comporter une série de stries annulaires parallèles 12 faisant saillie sur la périphérie externe de la branche 5 le long de celle-ci.

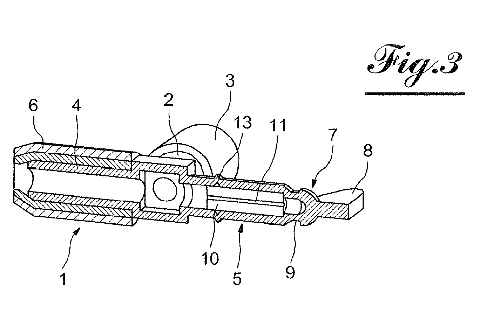

Selon la variante de réalisation représentée en figure 3, la branche tubulaire 5 du raccord 1 est conformée pour permettre la fixation par encliquetage de l'extrémité correspondante d'un tuyau souple. A cet effet, ce dernier peut comporter, comme cela est connu en soit, une douille axialement rétractable dans laquelle est logée la branche tubulaire 5 comportant un bourrelet annulaire 13 apte à s'engager dans une gorge correspondante de la douille pour fixer par encliquetage, de manière amovible, le tuyau souple sur la branche 5 après relâchement de la douille de verrouillage, une fois la partie sécable 7 séparée de la branche 5.

Bien entendu, l'invention n'est pas limitée à un raccord généralement en forme de T décrit précédemment. Le raccord peut tout simplement comporter une seule branche transversale tubulaire 5 de communication de fluide avec la branche 2 raccordée à la source de dépression et dont l'extrémité est pourvue de la partie sécable 7 décrite précédemment.

Le raccord de l'invention permet de résoudre à moindre coût le problème de monter occasionnellement sur le circuit de dépression présent sur le moteur du véhicule un réchauffeur thermique d'échappement nécessitant une prise de dépression. La solution du raccord à partie sécable réalisée en une seule pièce en une matière plastique répond efficacement à ce problème tout en étant économique puisqu'elle ne nécessite pas l'ajout de bouchon en matière plastique encliquetable ou en caoutchouc mais utilise uniquement une pince coupante pour séparer la partie sécable de la branche tubulaire correspondante du raccord afin d'y brancher en usine le tuyau de dépression, pince coupante qui ne sera que très rarement utilisée du fait que la plupart des véhicules automobiles ne nécessitent pas de raccordement de tuyau de dépression du réchauffeur thermique au raccord.

## Revendications

1. Raccord pour le branchement de tuyaux notamment d'un circuit de dépression du moteur d'un véhicule, comprenant au moins une branche tubulaire (5) à laquelle peut être raccordé un tuyau, **caractérisé en ce que** la branche tubulaire (5) comprend à son extrémité une partie sécable (7) obturant de façon étanche la branche tubulaire (5) et pouvant être séparée de la branche tubulaire (5) pour raccorder un tuyau à cette dernière.

2. Raccord selon la revendication 1, **caractérisé en ce que** la partie sécable (7) est reliée à l'extrémité de la branche tubulaire (5) par l'intermédiaire d'un gorge frangible (9).

3. Raccord selon la revendication 1 ou 2, **caractérisé en ce que** la partie sécable (7) est conformée en ailes de papillon (8) pour empêcher le raccordement d'un tuyau à la branche tubulaire (5) tant que cette partie (7) reste solidaire de la branche tubulaire (5).

4. Raccord selon l'une des revendications précédentes, **caractérisé en ce que** la partie sécable (7) peut être rompue à l'aide d'un outil, tel qu'une pince coupante.

5. Raccord selon l'une des revendications précédentes, **caractérisé en ce qu'**un insert rigide cylindrique percé axialement (10) est logé coaxialement dans la branche tubulaire (5) pour rigidifier cette dernière.

6. Raccord selon l'une des revendications précédentes, **caractérisé en ce que** la branche tubulaire (5) comprend des stries annulaires externes (12) permettant la fixation d'un tuyau souple emmanché sur la branche tubulaire (5).

7. Raccord selon l'une des revendications 1 à 5, **caractérisé en ce que** la branche tubulaire (5) est adaptée pour être raccordée à un tuyau par l'intermédiaire d'une liaison encliquetable.

8. Raccord selon l'une des revendications précédentes, **caractérisé en ce qu'**il comprend une deuxième branche tubulaire (4) en communication de fluide avec la branche tubulaire (5) à partie sécable (7) et à laquelle peut être raccordé un autre tuyau.

9. Raccord selon la revendication 8, **caractérisé en ce que** les deux branches tubulaires (4,5) sont reliées l'une à l'autre et à une branche tubulaire longitudinale (2) suivant une configuration en T.

10. Raccord selon l'une des revendications précédentes, **caractérisé en ce qu'**il est réalisé en une seule pièce en une matière thermoplastique.

11. Moteur à combustion interne d'un véhicule automobile, **caractérisé en ce qu'**il est équipé d'au moins un raccord (1), tel que défini dans l'une quelconque des revendications 1 à 10, et dont la partie sécable (7) de la branche tubulaire (5) peut être rompue pour raccorder à cette branche un tuyau faisant partie d'un circuit de dépression du moteur du véhicule.
